## Europäisches Patentamt

(19) **European Patent Office**

**Office européen des brevets**

(11) Veröffentlichungsnummer: **0 165 335 B1**

(12) # EUROPÄISCHE PATENTSCHRIFT

(45) Veröffentlichungstag der Patentschrift:
**16.09.87**

(21) Anmeldenummer: **84107396.8**

(22) Anmeldetag: **27.06.84**

(51) Int. Cl.⁴: **H 01 R 4/24,** H 04 Q 1/14, H 01 T 4/08

(54) Anschlussleiste mit löt-, schraub- und abisolierfreien Anschlusselementen mit polytropem Luftspalt zum Anschluss von Kabeladern und Freiluftkabeln (Dropwire-Kabeln).

(30) Priorität: **25.04.84 DE 3415369**

(43) Veröffentlichungstag der Anmeldung:
**27.12.85 Patentblatt 85/52**

(45) Bekanntmachung des Hinweises auf die Patenterteilung:
**16.09.87 Patentblatt 87/38**

(84) Benannte Vertragsstaaten:
**AT BE CH FR IT LI LU NL SE**

(56) Entgegenhaltungen:
**EP - A - 0 041 596**
**DE - B - 1 112 574**
**DE - C - 3 214 896**
**GB - A - 2 019 129**

(73) Patentinhaber: **KRONE Aktiengesellschaft,**
**Beeskowdamm 3-11, D-1000 Berlin 37 (DE)**

(72) Erfinder: **Gerke, Dieter, Allmendeweg 107,**
**D-1000 Berlin 27 (DE)**
Erfinder: **Müller, Manfred, Schwedenstrasse 3a,**
**D-1000 Berlin 65 (DE)**
Erfinder: **Zytowski, Peter, Elmshorner Strasse 21,**
**D-1000 Berlin 37 (DE)**
Erfinder: **Radelow, Wolfgang, Stubenrauchstrasse 26,**
**D-1000 Berlin 47 (DE)**

## Beschreibung

Die Erfindung betrifft eine Anschlussleiste mit löt-, schraub- und abisolierfreien Anschlusselementen mit polytropem Luftspalt — kurzgenannt LSA-PLUS-Anschlusskontakt — zum Anschluss von Kabeln der Fernmeldetechnik mit einem Gehäuseoberteil und einem Gehäuseunterteil.

Die Anschlussleisten werden in Endverzweiger oder andere beliebige Einbaugeräte eingebaut. Sie finden vor allem auch dort Anwendung, wo ein Übergang von Dropwirekabeln auf Kabeladern stattfindet.

Ein LSA-PLUS-Anschlusskontakt zum Anschliessen einer Kabelader und eines Freiluftkabels (Dropwire-Kabels), also zum Anschliessen zweier Kabel mit unterschiedlichem Aderndurchmesser, ist aus der DE-C-3 214 896 bekannt.

Hierbei besitzt das Anschlusselement im mittleren Bereich eines Kontaktschlitzes einen nach links und rechts ausgebildeten zweiten Kontaktschlitz mit einer U-förmigen Kontur. Oberhalb des U-förmigen Schlitzes ist der Schlitz zum Anschluss eines Dropwire-Kabels in seiner Breite grösser als unterhalb des U-förmigen Schlitzes ausgebildet, wobei der schmalere Kontaktschlitz zum Anschluss einer Kabelader dient.

Dieser vorteilhafte Anschlusskontakt, bei dem zwei Kabel mit unterschiedlichen Aderdurchmessern gleichzeitig anschliessbar sind, soll auch in der Anschlussleiste der vorliegenden Erfindung Verwendung finden.

Aufgabe der Erfindung ist es daher, eine Anschlussleiste mit Anschlusselementen zu schaffen, die unter Verwendung der bekannten Anschlusskontakte den Anschluss von mehreren Freiluftkabeln und Drahtadern ermöglicht. Des weiteren soll die Möglichkeit bestehen, auf Wunsch eine Grobfunkenstrecke einzurichten und ein Überspannungsableitermagazin oder einen Prüfstecker aufzustecken.

Diese Aufgabe wird erfindungsgemäss dadurch gelöst, dass die Anschlussleiste winkelförmige, jeweils um 180° gedreht angeordnete Paare der Anschlusselemente in separaten Kammern des Gehäuseoberteils und des Gehäuseunterteils steckbar aufnimmt, dass jedes Anschlusselement ausser einem Anschlusskontakt einen Mittelkontakt mit einem an der Unterseite angeformten halbkreisförmigen Ansatz aufweist, dass mittig der Längsachse der Anschlussleiste im Gehäuseunterteil eine Nut mit mehreren, mit zwei unterschiedlichen Absatzstufen ausgebildeten Aufnahmekammern angeordnet ist, dass in die Nut eine um 180° drehbare Erdschiene in zwei verschiedenen Niveaustellungen einlegbar ist und dass die Erdschiene in die Aufnahmekammern eingreifende Nasen aufweist.

Es ist also vorgesehen, im Gehäuseunterteil der Anschlussleiste eine Erdschiene anzuordnen, die durch Drehen bzw. Umlegen um 180° zwei verschiedene Niveaustellungen einnimmt; der Abstand zwischen der Erdschiene und einem am Mittelkontakt des Anschlusselementes angeordneten halbkreisförmigen Ansatz wird dadurch verändert.

Wird ein definierter Abstand eingestellt, so ist eine Grobfunkenstrecken-Funktion hergestellt, die bei auftretenden Überspannungen einen definierten Überschlag gewährleistet.

Vorteilhafte weitere Ausgestaltungen einzelner Massnahmen der Erfindung sind in den Unteransprüchen gekennzeichnet.

Die Erfindung wird anhand des in den Zeichnungen dargestellten Ausführungsbeispiels näher erläutert; darin zeigen:

Fig. 1 die Hauptansicht der Anschlussleiste,

Fig. 2 eine Seitenansicht nach Fig. 1,

Fig. 3 die Draufsicht nach Fig. 1,

Fig. 4 eine Seitenansicht der Anschlussleiste in einer Schnittdarstellung mit nicht ebenem Schnittverlauf,

Fig. 5 die Einzelheit Z der Fig. 3 in vergrösserter Darstellung ohne Gehäuseoberteil,

Fig. 6 eine Schnittdarstellung der Erdanschlussschraube nach der Schnittlinie A-B in Fig. 3 und

Fig. 7 die Anschlussleiste mit aufgestecktem Überspannungsableitermagazin und mit aufgestecktem Prüfstecker.

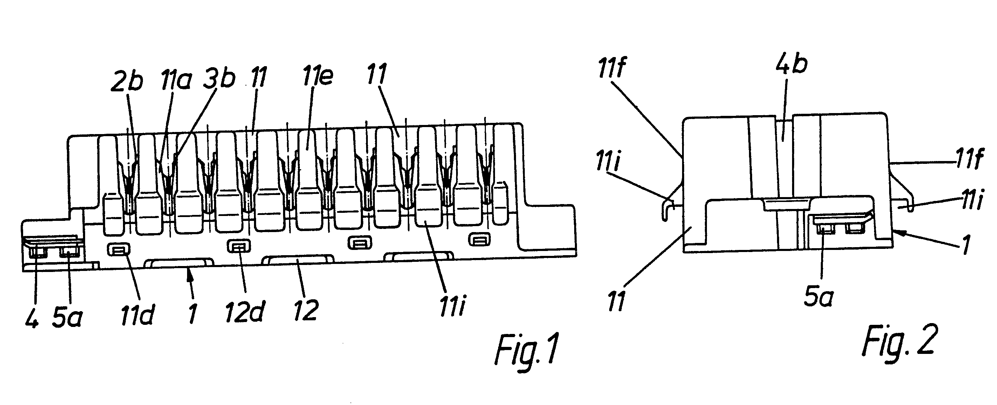

An die in den Figuren 1 bis 3 in drei Ansichten dargestellte Anschlussleiste 1 können auf der Teilnehmer- und Vermittlungsseite je fünf Doppeladern angeschlossen werden.

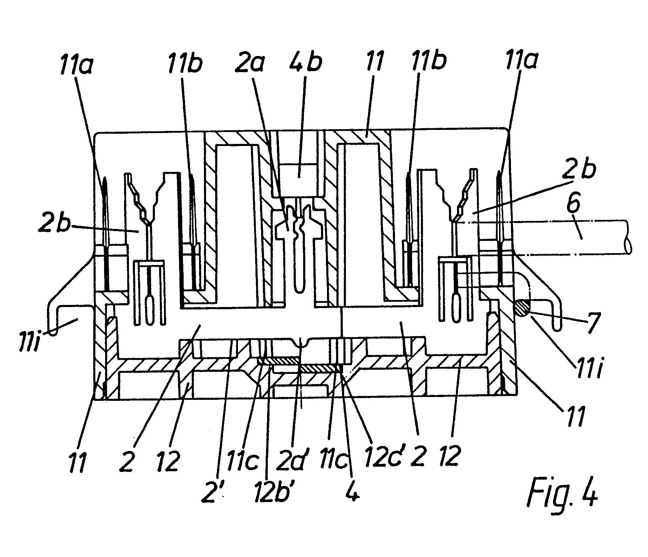

Hierbei kann jeder Anschlusskontakt 2b, 3b zwei Adern anschliessen, und zwar ein dickeres Freiluftkabel 6 und eine dünnere Kabelader 7, wie insbesondere die Fig. 4 zeigt.

Zur Lagesicherung und Zugentlastung des Freiluftkabels 6 und der Kabelader 7 sind beidseitig des Anschlusskontaktes 2b, 3b jeweils zentrisch verlaufende Klemmrippenpaare 11a, 11b vorgesehen, wie die Fig. 1 und insbesondere die Fig. 4 zeigen.

An den Kammern 13 des Gehäuseoberteils 11 und des Gehäuseunterteils 12 der Anschlussleiste 1 sind Begrenzungsschlitze 11h vorgesehen, die die Eindrücktiefe der Freiluftkabel 6 zum Kabeladerbereich begrenzen.

An den Seitenflächen 11f des Gehäuseoberteiles 11 der Anschlussleiste 1 sind durch Verlängerung der Zwischenwand 11e Schutzkanäle 11i vorgesehen, die zur Aufnahme der Kabeladern 7 dienen. Hierdurch wird erreicht, dass die Kabeladern 7 beim Herausziehen von Freiluftkabeln 6 nicht versehentlich mit entfernt werden.

Bei der Verbindung des Gehäuseoberteils 11 und des Gehäuseunterteils 12 rasten die auf beiden Längsseiten des Gehäuseunterteils 12 angeordneten Rasthaken 12d in die entsprechenden, am Gehäuseoberteil 11 angeordneten Rastöffnungen 11d ein.

Die im Gehäuseoberteil 11 und im Gehäuseunterteil 12 vorgesehenen separaten Kammern 13 weisen jeweils zwei diagonal gegenüberliegende Halteschlitze 13a, 13b auf. Diese Halteschlitze 13a, 13b dienen zur Aufnahme der LSA-PLUS-Anschlusskontakte 2b bzw. 3b.

Die Anschlusskontaktschlitze sind dementsprechend zum Freiluftkabel 6 bzw. zur Kabelader 7 in einem Winkel von ca. 45° versetzt angeordnet.

Wie die Fig. 4 zeigt, besteht das Anschlusselement 2 bzw. 3 aus einem Anschlusskontakt 2b bzw. 3b und einem Mittelkontakt 2a bzw. 3a.

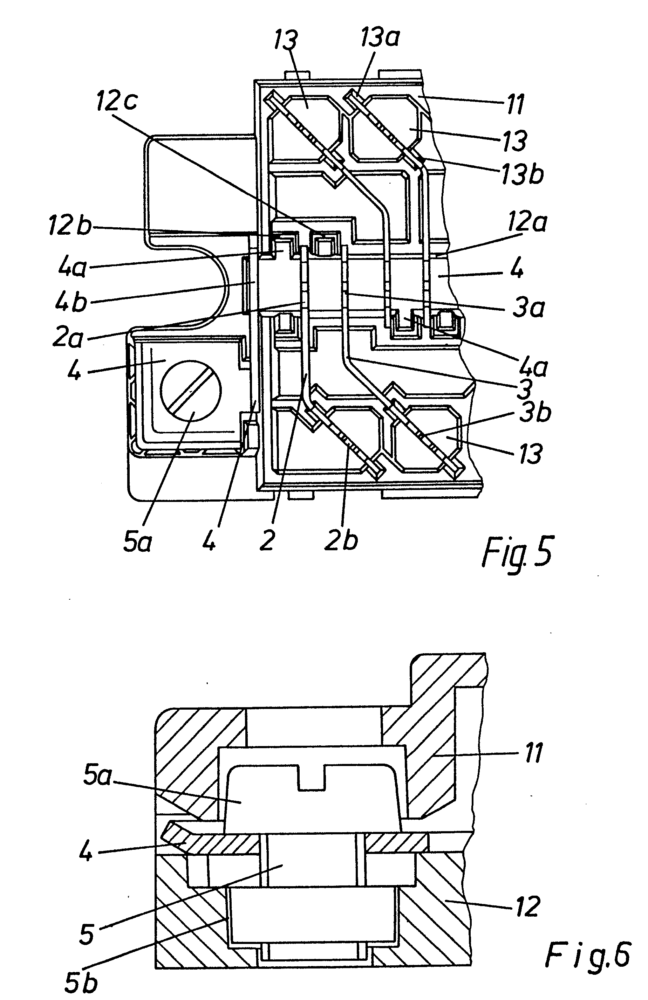

Die Paare von LSA-PLUS-Anschlusselementen 2, 3 sind, wie aus der Fig. 5 ersichtlich, winkelförmig gestaltet. Sie werden zweireihig jeweils um 180° gedreht eingebaut. Um den definierten Teilungsabstand zu gewährleisten, besitzen die Anschlusselemente 2, 3 unterschiedliche Schenkellängen, wie insbesondere die Fig. 5 zeigt.

Die Schenkellänge des Mittelkontaktes 2a des Anschlusselementes 2 ist hierbei gleich der Schenkellänge des Anschlusskontaktes 3b des Anschlusselementes 3. Die Schenkellänge des Anschlusskontaktes 2b des Anschlusselementes 2 ist gleich der Schenkellänge des Mittelkontaktes 3a des Anschlusselementes 3.

Jeder Mittelkontakt 2b bzw. 3b besitzt an seiner Unterseite 2', wie die Fig. 4 zeigt, einen angeformten halbkreisförmigen Ansatz 2a'.

Aus Fig. 5 ist weiterhin ersichtlich, dass mittig der Längsachse der Anschlussleiste 1 im Gehäuseunterteil 12 eine Nut 12a mit mehreren Aufnahmekammern 12b, 12c vorgesehen ist.

Diese Aufnahmekammern 12b, 12c besitzen, wie die Fig. 4 zeigt, zwei unterschiedliche Absatzstufen 12b', 12c'.

Diese Absatzstufen 12b', 12c' sind für das Einstellen einer Grobfunkenstrecke notwendig; denn in die Nut 12a wird eine Erdschiene 4 eingelegt, wie die Fig. 4 und 5 zeigen. Diese Erdschiene 4 besitzt mehrere Nasen 4a, die in die Aufnahmekammern 12b, 12c eingreifen und somit auf den Absatzstufen 12b', 12c' aufliegen.

Die Erdschiene 4 kann also — je nach Einbaulage — zwei verschiedene Niveaustellungen einnehmen.

Hierdurch wird der Abstand zwischen der Erdschiene 4 und dem am Mittelkontakt 2a bzw. 3a vorgesehenen halbkreisförmigen Ansatz 2a' bestimmt.

In der Fig. 4 sind beide Einbaulagen dargestellt. Die linke Figurhälfte zeigt die Erdschiene 4 mit einer Grobfunkenstrecken-Funktion. Die rechte Figurhälfte zeigt die Erdschiene 4 bei Normal-Ausführung.

Zur Lagesicherung und Fixierung der Erdschiene 4 sind am Gehäuseoberteil 11 Stifte 11c mit zwei unterschiedlichen Längen angeformt, die unabhängig von der Einbaulage der Erdschiene 4 auf die Nasen 4a drücken.

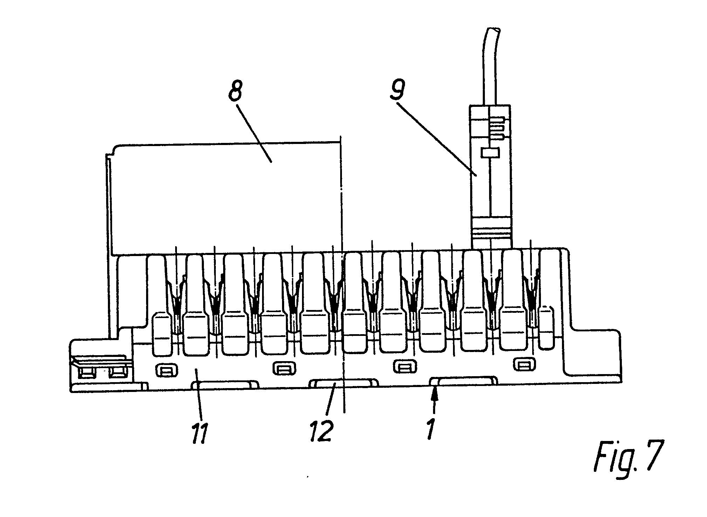

An den Enden der Erdschiene 4 sind, wie die Fig. 2, 3 und 5 zeigen, in das Gehäuseoberteil 11 hineinragende Lappen 4b angeformt, die zum Abgriff eines einsteckbaren Überspannungsableitermagazins 8 (Fig. 7) dienen.

Zu den Stirnseiten der Anschlussleiste 1 hin ist, wie die Fig. 5 zeigt, die Erdschiene 4 S-förmig abgewinkelt.

Hier ist eine aus einer Erdanschlussschraube 5a bestehende Anschlusseinrichtung 5 vorgesehen.

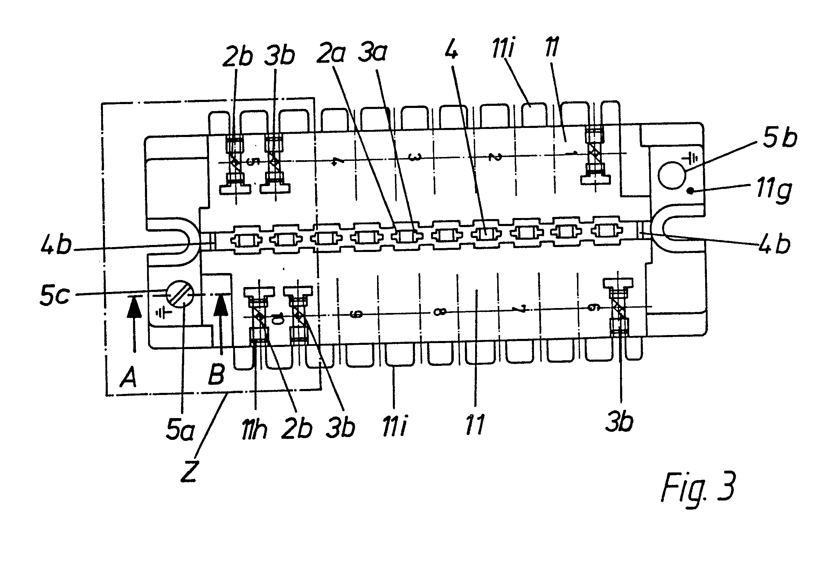

Die Anschlusseinrichtung 5, die in der Fig. 6 dargestellt ist, wird je nach Einbaulage der Erdschiene 4 entweder in einer Aufnahme 5b oder in einer Aufnahme 5c gelagert, wie die Fig. 3 zeigt.

Zur äusseren optischen Anzeige der Einbaulage der Erdschiene 4 ist am Gehäuseoberteil 11 eine Kennzeichnung 11g vorgesehen (Fig. 3).

Die Kennzeichnung 11g zeigt an, dass eine Grobfunkenstrecken-Funktion besteht.

Die Fig. 7 zeigt, dass mittig in die Anschlussleiste 1 ein Überspannungsableitermagazin 8 oder ein Prüfstecker 9 in die Mittelkontakte 2a, 3a einsteckbar ist. Der Prüfstecker 9 hat die Aufgabe, die Teilnehmerleitungen über Verbindungsschnüre auf Prüf- und Messgeräte, Hinweisdienste und andere Amtseinrichtungen zu legen.

**Patentansprüche**

1. Anschlussleiste mit löt-, schraub- und abisolierfreien Anschlusselementen (2, 3) mit polytropem Luftspalt zum Anschluss von Kabeln der Fernmeldetechnik, mit einem Gehäuseoberteil (11) und einem Gehäuseunterteil (12), dadurch gekennzeichnet, dass die Anschlussleiste (1) winkelförmige, jeweils um 180° gedreht angeordnete Paare der Anschlusselemente (2, 3) in separaten Kammern (13) des Gehäuseoberteils (11) und des Gehäuseunterteils (12) steckbar aufnimmt, dass jedes Anschlusselement (2, 3) ausser einem Anschlusskontakt (2b, 3b) einen Mittelkontakt (2a, 3a) mit einem an der Unterseite (2') angeformten halbkreisförmigen Ansatz (2a') aufweist, dass mittig der Längsachse der Anschlussleiste (1) im Gehäuseunterteil (12) eine Nut (12a) mit mehreren, mit zwei unterschiedlichen Absatzstufen (12b', 12c') ausgebildeten Aufnahmekammern (12b, 12c) angeordnet ist, dass in die Nut (12a) eine um 180° drehbare Erdschiene (4) in zwei verschiedenen Niveaustellungen einlegbar ist und dass die Erdschiene (4) in die Aufnahmekammern (12b, 12c) eingreifende Nasen (4a) aufweist.

2. Anschlussleiste nach Anspruch 1, dadurch gekennzeichnet, dass der Mittelkontakt (2a) des einen Anschlusselementes (2) des Paares und der Anschlusskontakt (3b) des anderen Anschlusselementes (3) des Paares gleiche Schenkellänge haben (Fig. 5).

3. Anschlussleiste nach Anspruch 1, dadurch gekennzeichnet, dass der Anschlusskontakt (2b) des einen Anschlusselementes (2) des Paares und der Mittelkontakt (3a) des anderen Anschlusselementes (3) gleiche Schenkellänge haben (Fig. 5).

4. Anschlussleiste nach Anspruch 1, dadurch gekennzeichnet, dass am Gehäuseoberteil (11) der Anschlussleiste (1) beidseitig des Anschlusskontaktes (2b, 3b) zentrisch verlaufende Klemmrippenpaare (11a, 11b) vorgesehen sind.

5. Anschlussleiste nach Anspruch 1, dadurch gekennzeichnet, dass an den Kammern (13) Begrenzungsschlitze (11b) vorgesehen sind.

6. Anschlussleiste nach Anspruch 1, dadurch gekennzeichnet, dass an einer Seitenfläche (11f) des Gehäuseoberteiles (11) durch Verlängerung einer Zwischenwand (11e) ein Schutzkanal (11i) gebildet ist.

7. Anschlussleiste nach Anspruch 1, dadurch gekennzeichnet, dass die Erdschiene (4) an einer Stirnseite der Anschlussleiste (1) S-förmig abgewinkelt ist und eine Anschlusseinrichtung (5) mit einer Erdanschlussschraube (5a) aufweist.

8. Anschlussleiste nach Anspruch 7, dadurch gekennzeichnet, dass an beiden Enden der Erdschiene (4) in das Gehäuseoberteil (11) hineinragende Lappen (4b) angeformt sind.

9. Anschlussleiste nach Anspruch 1, dadurch gekennzeichnet, dass am Gehäuseoberteil (11) Stifte (11c) mit zwei unterschiedlichen Längen angeformt sind, die auf die Nasen (4a) der Erdschiene (4) drücken.

10. Anschlussleiste nach Anspruch 1, dadurch gekennzeichnet, dass eine Kennzeichnung (11g) die Einbaulage der Erdschiene (4) bei einer Grobfunkenstrecken-Funktion anzeigt.

11. Anschlussleiste nach Anspruch 1, dadurch gekennzeichnet, dass beidseitig jeweils vier am Gehäuseunterteil (12) angeformte Rasthaken (12d) in entsprechende am Gehäuseoberteil (11) angeordnete Öffnungen (11d) einrasten.

12. Anschlussleiste nach Anspruch 1, dadurch gekennzeichnet, dass die im Gehäuseoberteil (11) und im Gehäuseunterteil (12) angeordneten Kammern (13) jeweils zwei diagonal gegenüberliegende Halteschlitze (13a, 13b) aufweisen.

**Claims**

1. Connector bank with solderless, non-screwed and stripless connecting elements (2, 3) with a polytropic air gap for the connection of cables in electrical communications, with an upper housing part (11) and a lower housing part (12), characterized by that the oonnector bank (1) accommodates in plug- in manner angular pairs of the connecting elements (2, 3), each turned by 180°, in separate chambers (13) of the upper housing part (11) and of the lower housing part (12), that each connecting element (2, 3) comprises, in addition to a connecting contact (2b, 3b), a centre contact (2a, 3a) with a semi-circular projection (2a') provided at the underside (2'), that in the centre of the longitudinal axis of the connector bank (1), a groove (12a) is arranged in the lower housing part (12), said groove (12a) having several accomodation chambers (12b, 12c) provided with two different recess steps (12b', 12c'), that an earthing rail (4) can be inserted in two different level positions into the groove, the earthing rail being rotatable by 180°, and that the earthing rail (4) exhibits noses (4a) engaging into the accomodation chambers (12b, 12c).

2. Connector bank according to claim 1, characterized by that the centre contact (2a) of one connecting element (2) of the pair and the connecting contact (3b) of the other connecting element (3) of the pair have identical leg length (fig. 5).

3. Connector bank according to claim 1, characterized by that the connecting contact (2b) of one connecting element (2) of the pair and the centre contact (3a) of the other connecting element (3) have identical leg length (fig. 5).

4. Connector bank according to claim 1, characterized by that at the upper housing part (11) of the connector bank (1), on both sides of the connecting contact (2b, 3b), centrally disposed clamping rib pairs (11a, 11b) are provided.

5. Connector bank according to claim 1, characterized by that limiter slots (11h) are provided at the chambers (13).

6. Connector bank according to claim 1, characterized by that on a side face (11f) of the upper housing part (11), a protective channel (11i) is formed by extension of an intermediate wall (11e).

7. Connector bank according to claim 1, characterized by that the earthing rail (4) is angled in S-shaped manner at one front face of the connector bank (1) and exhibits a connecting device (4) provided with an earth connection screw (5a).

8. Connector bank acording to claim 7, characterized by that on both ends of the earthing rail (4), lugs (4b) projecting into the upper housing part (11) are provided.

9. Connector bank according to claim 1, characterized by that on the the upper housing part (11), pins (11c) with two different lengths are provided, these pins pressing on the noses (4a) of the earthing rail.

10. Connector bank according to claim 1, characterized by that a marking (11g) indicates the mounting position of the earthing rail (4) in case of a coarse spark gap function.

11. Connector bank according to claim 1, characterized by that on both sides of the lower housing part (12), four snap- in hooks (12d) each are provided, engaging into corresponding openings (11d) provided at the upper housing part (11).

12. Connector bank according to claim 1, characterized by that the chambers (13) arranged in the upper housing part (11) and in the lower housing part (12) each exhibit two holding slots (13a, 13b) disposed diagonally opposed to each other.

**Revendications**

1. Réglette de raccordement comportant des éléments de raccordement (2, 3) sans soudures, ni vis, ni dénudage ayant une fente d'air polytropique pour le raccordement de fils de câbles et de câbles aériens de la technique des télécommunications, avec une partie de boîtier supérieure (11) et une partie de boîtier inférieure (12), caractérisé par le fait que la réglette de raccordement (1) reçoit de façon enfichable des paires d'éléments de raccordement (2, 3) disposées en déport de 180° dans des chambres séparées (13) de la partie supérieure de boîtier (11) et de la partie inférieure (12), que chaque élément de raccordement (2, 3) présente outre un contact de raccordement (2b, 3b) un contact médian (2a, 3a) avec sur la partie inférieure (2') un appendice (2a') en forme de demi-cercle, qu'au milieu de l'axe longitudinal de la réglette de raccordement (1) dans la partie inférieure du boîtier (12) est disposée une rainure (12a) avec deux chambres de réception (12b, 12c) avec deux différents talons étagés (12b', 12c'), que dans la rainure (12a) peut être disposé sur deux niveau différents un rail de terre (4) rotatif de 180° et que le rail de terre (4) présente des taquets (4a) engrenant dans les chambres de réception (12b, 12c).

2. Réglette de raccordement, caractérisée par le fait que le contact médian (2a) de l'un des éléments de raccordement (2) de la paire et le contact de raccordement (3b) de l'autre élément (3) de la paire ont des branches de même longueur (fig. 5).

3. Réglette de raccordement selon la revendication 1, caractérisé par le fait que le contact de raccordement (2b) de l'un des éléments de raccordement (2) de la paire et le contact médian (3a) de l'autre élément de raccordement (3) ont des branches de même longueur (fig. 5).

4. Réglette de raccordement selon la revendication 1, caractérisée par le fait que des paires de collerettes de serrage (11a, 11b) centriques sont prévues sur la partie supérieure du boîtier (11) de la réglette de raccordement (1) des deux côtés du contact de raccordement (2b, 3b).

5. Réglette de raccordement selon la revendication 1, caractérisée par le fait que des fentes de limitations (11h) sont prévues sur les chambres (13).

6. Réglette de raccordement selon la revendication 1, caractérisée par le fait qu'un canal de protection (11i) est formé sur une face latérale (11g) de la partie supérieure du boîtier (11) par prolongement d'une paroi intermédiaire (11e).

7. Réglette de raccordement selon la revendication 1, caractérisée par le fait que le rail de terre (4) est plié en S sur une face frontale de la réglette de raccordement (1) et contient un dispositif de raccordement (5) avec une vis de jonction au sol (5a).

8. Réglette de raccordement selon la revendication 7, caractérisée par le fait que des languettes (4b) faisant saillie dans la partie supérieure du boîtier 11 sont moulées sur les deux extrémités du rail de terre (4).

9. Réglette de raccordement selon la revendication 1, caractérisée par le fait que des pointes (11c) de deux longueurs différentes qui appuient sur les taquets (4a) du rail de terre (4) sont moulées sur la partie supérieure du boîtier (11).

10. Réglette de raccordement selon la revendication 1, caractérisée par le fait qu'un repère (11g) indique la position de montage du rail de terre (4) pour une fonction d'éclateur à étincelle.

11. Réglette de raccordement selon la revendication 1, caractérisée par le fait que quatre crochets de retenu (12d) moulés sur la partie inférieure du boîtier (12) engrènent dans des évidements (11d) adéquats sur la parties supérieure du boîtier (11).

12. Réglette de raccordement selon la revendication 1, caractérisée par le fait que les chambres (13) disposées dans la partie supérieure du boîtier (11) et dans la partie inférieure du boîtier (12) sont munies de deux fentes de retenu (13a, 13b) se trouvant diagonalement en face.

Fig. 2

Fig.1

*Fig. 3*

0 165 335

Fig. 4

Fig. 5

Fig. 6

Fig. 7